# EUROPEAN PATENT APPLICATION

(11) **EP 1 491 256 A1**
(43) Date of publication of application: **29.12.2004**
(21) Application number: 03715519.9
(22) Date of filing: 27.03.2003
(51) Int. Cl.: B01J 20/34

(54) **METHOD FOR REGENERATING ADSORBENT BY HEATING**

(30) Priority: 27.03.2002 JP 2002088617; 19.04.2002 JP 2002118405
(71) Applicant: National Institute of Advanced Industrial Science and Technology, Tokyo 100-8921 (JP)
(72) Inventor: KOBAYASHI, Satoru, Tsukuba-shi, Ibaraki (JP); KIKUKAWA, Nobuyuki, Tsukuba-shi, Ibaraki (JP); SUGASAWA, Masami, Tsukuba-shi, Ibaraki (JP); YAMAURA, Itsuo, c/o Shinshu University, Ueda-shi, Nagano 386-8567 (JP)
(74) Representative: Zimmermann, Gerd Heinrich
(86) International application number: PCT/JP2003/003842
(87) International publication number: WO 2003/080237

(57) **Abstract**

A heat-regeneration method of an adsorbent containing an adsorbed substance wherein the heat-regeneration can be conveniently and efficiently carried out. It provides a method for regenerating an adsorbent by desorbing an adsorbed substance which has been adsorbed to the adsorbent through heating, wherein said method is a heat-regeneration method of the adsorbent which comprises irradiating a microwave or applying a high-frequency wave to the adsorbent containing the adsorbed substance in the presence of a magnetic material having a Curie point of from 50 to 350°C to thereby allow the magnetic material to generate heat and to simultaneously heat the absorbent by the generated heat.

## Description

### TECHNICAL FIELD

The present invention relates to a heat-regeneration method of a spent adsorbent containing an adsorbed substance, and to an adsorbent.

### BACKGROUND ART

As adsorbents, particulate or fibrous activated carbon, silica gel, alumina, zeolite and the like are known. These adsorbents are used for adsorption of adsorptive substances such as organic compounds. However, after the adsorption treatment, it is necessary to regenerate the adsorbents by heating them to release the adsorbed substances.

As a heat-regeneration method of an adsorbent containing an adsorbed substance, a method of bringing the adsorbent into contact with steam of from 105 to 150°C is generally adopted. In this method, since the desorbed substance from the adsorbent is a mixture with the steam, a method of liquefying the mixture with cooling and separating the desorbed substance from water formed through condensation of the steam is carried out in order to recover the desorbed substance.

However, such desorption and regeneration using steam generally require huge facilities and steam management. In addition, since the heating of the adsorbent by steam is carried out by external heat transmission, the heat efficiency is not so high. Furthermore, when heat loss over the whole facilities is considered, the heat efficiency is considerably low. Accordingly, the running cost is high at present. Moreover, since the desorbed substance should be separated from water, the recovery of the desorbed substance requires strict water management for preventing environmental pollution.

A method for heat-desorption of an adsorbed substance from an adsorbent using no steam but microwave irradiation has been also proposed but this method involves problems that temperature control and homogeneous heating of the adsorbent are difficult, so that the method has not been satisfactory yet.

An object of the present invention is to provide a heat-regeneration method of an adsorbent containing an adsorbed substance wherein the heat-regeneration can be conveniently and efficiently carried out, and an adsorbent.

### DISCLOSURE OF THE INVENTION

The present inventors have investigated earnestly in order to solve the above problems and completed the present invention.

That is, the present invention provides a method for regenerating an adsorbent by desorbing an adsorbed substance which has been adsorbed to the adsorbent through heating, wherein said method is a heat regeneration method of the adsorbent which comprises irradiating a microwave or applying a high-frequency wave to the adsorbent containing the adsorbed substance in the presence of a magnetic material having a Curie point of from 50 to 350°C to thereby allow the magnetic material to generate heat and to simultaneously heat the adsorbent by the generated heat.

Also, the present invention provides an adsorbent comprising an adsorbent and a magnetic material, wherein the magnetic material has a Curie point of from 50 to 350°C.

### BRIEF DESCRIPTION OF THE DRAWINGS

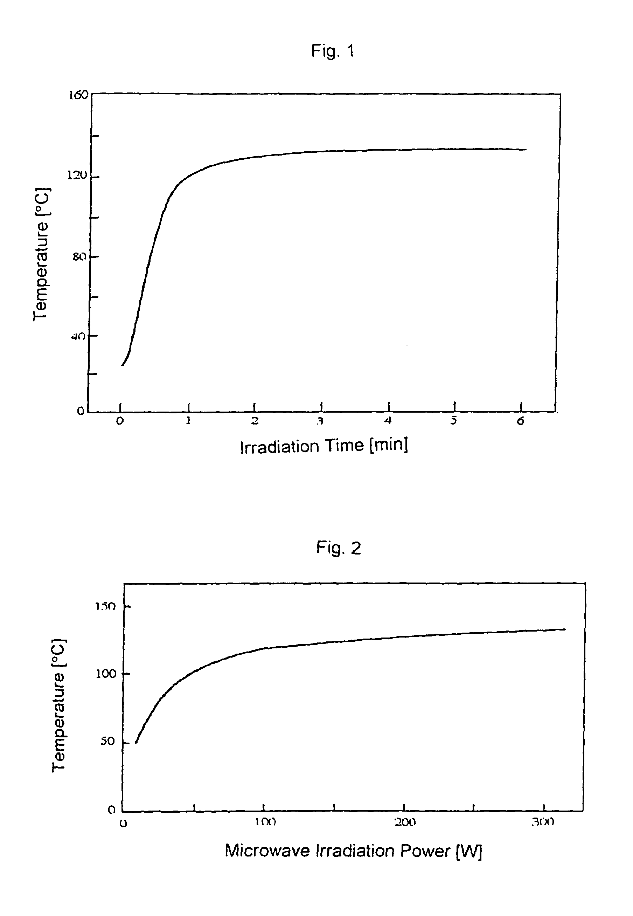

Fig. 1 shows a change of the temperature of a magnetic material with time when a microwave is irradiated to the magnetic material. Fig. 2 shows a relationship between the temperature of a magnetic material and the irradiating power when a microwave is irradiated to the magnetic material.

### BEST MODE FOR CARRYING OUT THE INVENTION

The present invention relates to a method for regenerating an adsorbent in which the adsorbent containing an adsorbed substance is heated to thereby release the adsorbed substance from the adsorbent, wherein said method comprises irradiating a microwave or applying a high-frequency wave to the adsorbent containing the adsorbed substance in the presence of a magnetic material to thereby allow the magnetic material to generate heat and to heat the adsorbent by the generated heat.

As a result of extensive studies on the method for regenerating an adsorbent containing an adsorbed substance by heating the adsorbent, the present inventors have found that the adsorbent can be conveniently and efficiently regenerated when the adsorbent is irradiated with a microwave or applied with a high-frequency wave (hereinafter also referred to as "irradiated with a microwave or the like") in the presence of a magnetic material to thereby allow the magnetic material to generate heat and the adsorbent is heated by utilizing the generated heat.

Fig. 1 shows a change of the temperature of a magnetic material having a Curie point of 140°C when a microwave of 200 W is irradiated to the magnetic material.

As is apparent from Fig. 1, the temperature of the magnetic material is rapidly raised by the microwave irradiation and is kept at a constant temperature (close to the Curie point).

In the heat generation of the magnetic material by microwave irradiation, when the microwave power (W) is variously changed as shown in Fig. 2, the present inventors have confirmed that the temperature of the magnetic material does not vary greatly by irradiation with a microwave of from 100 to 300 W and is not increased to a temperature equal to or higher than the Curie point.

The reason why the temperature of the magnetic material is not increased to a temperature equal to or higher than the Curie point is that the magnetic material loses its magnetism at a temperature equal to or higher than the Curie point and hence heat generation does not occur.

The heat-generation behavior of the magnetic material by the microwave irradiation as shown above exhibits that it is very suitable as a heating method of an adsorbent containing an adsorbed substance.

Namely, the fact that the temperature of the magnetic material is not raised to a temperature equal to or higher than the Curie point means that a heating operation can be safely carried out.

Moreover, the fact that the temperature-increasing rate of the magnetic material at the microwave irradiation is large means that the heating of the adsorbent takes only a short time and hence the adsorbent can be efficiently heated.

By the microwave irradiation of the magnetic material, the magnetic material can be allowed to generate heat usually at a temperature-increasing rate of from 20 to 200°C/minute.

According to the present invention, when the magnetic material is homogeneously dispersed in an adsorbent or an adsorbent-packed bed and is irradiated with a microwave or the like in this state to generate heat, the adsorbent-packed bed can be homogeneously and rapidly heated evenly with good energy efficiency to a predetermined temperature (Curie point).

In the case where the magnetic material is irradiated with a microwave or the like to generate heat, as mentioned above, the temperature achieved by the heat generation becomes a constant temperature (close to the Curie point) without particularly depending on the intensity of the microwave or the like. Therefore, in the case where an adsorbent or adsorbent-packed bed in which the magnetic material is dispersed is irradiated with a microwave or the like for heating, since the adsorbent or the bed reaches a constant temperature (close to the Curie point), the whole adsorbent-packed bed can be homogeneously heated to a predetermined temperature (close to the Curie point) even when it is irradiated with a microwave or the like in one direction.

As the adsorbent used in the present invention, various adsorbents hitherto known can be employed. Examples of the adsorbents include activated carbon, silica gel, alumina, magnesia, calcia, silica-alumina, zeolite, and the like. The shape of the adsorbent may be any of various shapes such as powdery, fibrous and granular shapes, and is not particularly limited.

As the magnetic material used in the present invention, those having a Curie point of from 50 to 350°C, preferably from 100 to 200°C, can be employed. Examples of the magnetic materials include soft magnetic ferrite (Curie point of from 100 to 350°C) such as nickel-zinc ferrite, garnet-based ferrite (Curie point of from 100 to 300°C) such as yttrium-iron garnet, an alloy (Curie point of from 50 to 350°C) such as iron-chromium, an elemental metal (Curie point of 300°C or higher) such as nickel, and the like.

In the present invention, an adsorbent is irradiated with a microwave or the like in the presence of the magnetic material. In this case, the adsorbent is usually used in the form of a packed bed which is packed in a container, a column or the like. For homogeneous heating of the packed bed, it is preferable to disperse the magnetic material homogeneously in the packed bed.

As a method for obtaining a packed bed in which the magnetic material is homogeneously dispersed, there is a method of homogeneously mixing and dispersing the magnetic material in the adsorbent at the time when the adsorbent is packed in a container or a column and then packing the mixture. In the case of mixing the adsorbent with the magnetic material, the shape of the magnetic material may be a shape capable of easy mixing with the adsorbent and, according to the shape of the adsorbent, the magnetic material can be used in a powdery, granular or the like shape. Moreover, a method of using a molded product composed of a mixture of an adsorbent and a magnetic material and a method of using a product wherein a magnetic material is contained in or supported on an adsorbent are also preferable.

In the case where an adsorbent and a magnetic material are mixed and packed into a packed tower, the ratio of the magnetic material is from 0.05 to 50% by volume, preferably 0.1 to 20% by volume, and more preferably from 0.5 to 10% by volume, based on the total amount of the adsorbent (in the state containing no adsorbed substance) and the magnetic material.

The preferable adsorbent used in the present invention is an adsorbent wherein a magnetic material is supported on or contained in an adsorbent beforehand. Such an adsorbent is a molded product obtainable by molding a mixture of a powdery adsorbent and a powdery magnetic material into a required shape. In this case, a binder is used as a molding auxiliary. The binder may be any of conventionally used binders and, for example, water, bentonite, water glass, a polymeric substance, or the like can be used.

In addition, an adsorbent prepared by a method of partially or wholly imparting magnetism in a step of synthesizing the adsorbent, an adsorbent wherein a magnetic material in an ultra-fine particle form is supported on or adhered to the adsorbent, an adsorbent which is adhered to the surface of the magnetic material, and the like are also preferable.

The shape of the molded product may be any of various shapes such as spherical, columnar, and cylindrical shapes.

Since such a molded product and an adsorbent on which a magnetic material is supported contain a magnetic material therein, heat generation occurs when they are irradiated with a microwave or the like. In the present invention, the ratio of the magnetic material in the molded product or adsorbent is suitably set at from 0.05 to 50% by volume, preferably from 0.1 to 20% by volume, and more preferably from 0.5 to 10% by volume.

In the microwave used in the present invention, its wavelength is from 10 MHz to 25 GHz, and is preferably an ISM frequency band. In general, a microwave of about 2.45 GHz is employed. Moreover, in the high-frequency wave used in the present invention, its wavelength is from 1 KHz to 10 MHz, and preferably from 10 KHz to 1 MHz.

For preferably carrying out the present invention, first, in the adsorption step, a gas containing an adsorptive substance is supplied through the adsorbent or packed bed in which the magnetic material is dispersed and thereby the adsorptive substance is adsorbed to the adsorbent.

Then, in the desorption step, the packed bed is irradiated with a microwave or the like. The magnetic material present in the packed bed absorbs the microwave or the like to generate heat, and the adsorbent is heated by the generated heat. Thereby, the adsorbed substance contained in the adsorbent is desorbed and recovered. In the case where the adsorptive substance is an organic solvent, the gaseous organic solvent desorbed from the adsorbent in the desorption step is liquefied with cooling and is recovered.

The adsorptive substances to be adsorbed to the adsorbent include volatile organic compounds (e.g., aromatic solvents such as benzene, toluene and xylene, alcohols, organic amines, ketones, aldehydes, *etc*.), and polar gases (e.g., sulfurous acid gas, carbon dioxide gas, nitrogen-containing gases, *etc*.).

### Examples

The present invention is described below in more detail with reference to Example.

### Example 1

A mixture of hydrophobic zeolite as an adsorbent and nickel-zinc ferrite (Curie point of 140°C) (content of nickel-zinc ferrite: 20% by volume) was press-molded into particles having a diameter of about 1 mm and 1 g of the particles was packed in a glass tube having a diameter of 8 mm to prepare an adsorption column.

Then, helium containing 500 ppm of benzene as an adsorptive substance was supplied through the adsorption column at a temperature of 25°C to adsorb the benzene to the adsorption column.

Next, a microwave (300 W, wavelength: 2.45 GHz) is irradiated to the adsorption column under circulation of helium. As a result, the temperature of the adsorption column was rapidly raised (temperature-increasing rate: about 150°C/minute) and the temperature reached around 140°C, which is the Curie point of nickel-zinc ferrite, within 1 minute of the microwave irradiation, the temperature being stabilized at this temperature.

The benzene concentration in the helium flown through the adsorption column rose at a stretch immediately after the microwave irradiation and the whole amount of the benzene adsorbed to the adsorbent was desorbed within 5 minutes after the start of the microwave irradiation. The helium containing the desorbed benzene was cooled and thereby the benzene contained in the helium was liquefied and recovered.

### INDUSTRIAL APPLICABILITY

In accordance with the heat-regeneration method of an adsorbent according to the present invention, an adsorbed substance can be desorbed with a high heat efficiency since it is not necessary to use steam. In addition, the method requires only a compact apparatus and hence the running cost is remarkably reduced.

## Claims

1. A method for regenerating an adsorbent by desorbing an adsorbed substance which has been adsorbed to the adsorbent through heating, wherein said method is a heat-regeneration method of the adsorbent which comprises irradiating a microwave or applying a high-frequency wave to the adsorbent containing the adsorbed substance in the presence of a magnetic material having a Curie point of from 50 to 350°C to thereby allow the magnetic material to generate heat and to simultaneously heat the adsorbent by the generated heat.

2. The method according to claim 1, wherein the adsorbent contains the magnetic material in a dispersed state.

3. The method according to claim 1, wherein the adsorbent containing no magnetic material is kept in the form of a packed bed and the magnetic material is dispersed in the packed bed.

4. An adsorbent comprising an adsorbent and a magnetic material, wherein the magnetic material has a Curie point of from 50 to 350°C.
